# EUROPÄISCHE PATENTANMELDUNG

(11) **EP 1 705 418 A2**
(43) Veröffentlichungstag der Anmeldung: **27.09.2006**
(21) Anmeldenummer: 06006107.4
(22) Anmeldetag: 24.03.2006
(51) Int. Cl.: F16L 47/03

(54) **Kunststoffrohr und Verfahren und Vorrichtung zum Fügen zweier Kunststoffrohre**

(30) Priorität: 24.03.2005 DE 102005014339
(71) Anmelder: Karl Schöngen KG, Kunststoff-Rohrsysteme, 38229 Salzgitter (DE)
(72) Erfinder: Meyer, Hans-Heinrich, 38229 Salzgitter (DE); Wachsmuth, Peter, 38259 Salzgitter (DE)
(74) Vertreter: Stornebel, Kai

(57) **Zusammenfassung**

Die Erfindung betrifft Kunststoffrohre (1, 2) mit mechanischen Kopplungsbereichen (110, 220), die ineinander steckbar sind. An den Kontaktflächen (9) der stirnseitigen und rohrseitigen Enden (111, 112, 221, 222) der Kopplungsbereiche (110, 220) sind Metallelemente (3) angeordnet, über die mittels Induktion Aufschmelzbereiche (111', 112', 221', 222') aufgeschmolzen werden und neben einer mechanischen Kopplung eine stoffschlüssige Verbindung der beiden Rohre (1, 2) an zwei Stellen ermöglichen.

## Beschreibung

Die Erfindung betrifft ein Kunststoffrohr mit einem vorderen Ende und einem hinteren Ende, wobei an dem vorderen Ende ein vorderer Kopplungsbereich mit formschlüssig wirkenden Verrastungsmitteln und an dem hinteren Ende ein hinterer Kopplungsbereich ausgebildet ist, der korrespondierend zu den Verrastungsmitteln ausgebildete Formschlusselemente aufweist, wobei der hintere Kopplungsbereich ausgebildet ist den vorderen Kopplungsbereich eines zweiten Kunststoffrohres aufzunehmen, so dass mehrere Rohre miteinander mechanisch verbindbar sind. Ebenfalls betrifft die Erfindung ein Verfahren zum Fügen zweier solcher Kunststoffrohre und eine Vorrichtung dazu.

Die vorliegende Erfindung ist insbesondere bei der Rohrsanierung geeignet, wenn nur relativ kurze Rohrabschnitte gefügt und in einem Relining-Verfahren verlegt werden.

Ein Kunststoffrohr, an dessen Ende der Innendurchmesser über einen Bereich vergrößert ist und an dessen anderem Ende der Außendurchmesser über einen Bereich verringert ist, wobei die Enden mit Mitteln zum mechanischen Verbinden mehrerer Rohre versehen sind, ist beispielsweise aus der DE 195 36 703 A1 bekannt.

Derartige Rohre können als Lehr- oder Verlegerohre für Gasleitungen oder Strom- und Fernmeldekabei oder dergleichen verwendet werden und werden mittels sogenannter "Erdraketen" im Erdreich verlegt, Solche Rohre werden auch im Rahmen einer Rohrleitungssanierung, beispielsweise für Abwasserleitungen, verwendet, wobei durch einen Berstkopf das bestehende Rohr aufgebrochen oder auskalibriert wird. Das Neurohr aus Kunststoff wird eingezogen oder mechanisch vorangeschoben. Dadurch kann bei der Erneuerung von Abwasserkanälen oder Versorgungsleitungen erhebliche Zeit eingespart werden, weil der Boden über die gesamte Rohrlänge nicht ausgehoben werden muss und beispielsweise Straßen unterquert werden können.

Das Neurohr wird dabei aus einem Rohrstrang gebildet, der aus einer Mehrzahl einzelner Rohre zusammengesetzt ist, die über eine Rastverbindung miteinander gekoppelt werden können. Die Verrastung der Rohre erfolgt dabei über eine Eindrehung an einem Ende, in die ein radial nach innen ragender Vorsprung am äußeren anderen Ende einschnappen kann, wenn zwei Rohre ineinander gesteckt werden.

Bei der Rohrverlegung kann es zu Biegungen innerhalb des Verlegerohres kommen, wobei die Gefahr besteht, dass die ausschließlich mechanisch verrasteten Enden der Rohrabschnitte sich zueinander verbiegen, was zu einer Undichtigkeit führen kann.

In der DE 200 17 639 U1 ist beschrieben, dass Dichtringe zwischen den Verrastungsmitteln angeordnet sind. Diese Dichtmittel können hinsichtlich der geförderten Substanz nicht beständig sein, darüber hinaus ist das Problem der Gefahr der sich öffnenden, rein mechanischen Verbindungen weiterhin gegeben.

Aus der DE 102 29 242 C1 ist ein Verfahren bekannt, bei dem ein stirnseitiges Ende eines Rohres aufgeschmolzen wird und die Rohrenden in eine Endposition ineinander verschoben werden, wobei die Verrastungsmittel der Rohre formschlüssig ineinandergreifen. In dem aufgeschmolzenen Bereich wird eine stoffschlüssige Verbindung hergestellt, so dass an einer Kontaktstelle der Rohre eine stoffschlüssige Verbindung bereitgestellt wird. Mit einem solchen Verfahren konnte die Dichtigkeit und Festigkeit des zusammengesetzten Rohres wesentlich erhöht werden.

Aufgabe der vorliegenden Erfindung ist es, ausgehend von diesem Stand der Technik ein Kunststoffrohr sowie ein Verfahren und eine Vorrichtung zum Fügen zweier Kunststoffrohre bereitzustellen, mit denen eine weitere Verbesserung der Festigkeit in der Fügestelle der Kunststoffrohre erzielt werden kann.

Erfindungsgemäß wird diese Aufgabe durch ein Kunststoffrohr mit den Merkmalen des Anspruchs 1, ein Verfahren mit den Merkmalen des Anspruchs 9 sowie eine Vorrichtung mit den Merkmalen des Anspruchs 12 gelöst. Vorteilhafte Ausgestaltungen und Weiterbildungen der Erfindung sind in den Unteransprüchen beschrieben.

Das erfindungsgemäße Kunststoffrohr sieht an dem vorderen und hinteren Ende jeweils einen Kopplungsbereich vor, wobei der vordere Kopplungsbereich mit formschlüssig wirkenden Verrastungsmitteln und der hintere Kopplungsbereich mit dazu korrespondierend ausgebildeten Formschlussmitteln ausgestattet ist. Der hintere Kopplungsbereich ist zur Aufnahme eines vorderen Kopplungsbereiches eines zweiten Rohres ausgebildet, so dass mehrere Rohre miteinander mechanisch verbindbar sind. An den stirnseitigen Enden der Kopplungsbereiche ebenso wie an den rohrseitigen Enden der Kopplungsbereiche sind sich in Axialrichtung erstreckende Aufschmelzbereiche ausgebildet. Metallelemente sind dergestalt im Bereich der stirnseitigen oder rohrseitigen Enden der Kopplungsbereiche angeordnet, dass im mechanisch gefügten Zustand zumindest ein Metallelement im Bereich einer Kontaktstelle zweier Aufschmelzbereiche vorhanden ist. Es ist also vorgesehen, dass beispielsweise nur an beiden Enden der Aufschmelzbereiche des vorderen Kopplungsbereiches oder des hinteren Kopplungsbereiches Metallelemente angeordnet sind, gegebenenfalls kann an allen stirn- und rohrseitigen Enden ein entsprechendes Metallelement angeordnet sein. Wenn die Metallelemente an den jeweils stirnseitigen Aufschmelzbereichen der Kopplungsrohre angeordnet sind, hat dies den Vorteil, dass eine Anbringung an den stirnseitigen Aufschmelzbereichen relativ einfach durch Aufkleben oder Anschmelzen mit anschließendem Einschmelzen erfolgen kann. Um die Metallelemente vor mechanischen Beschädigungen und einem ungewollten Lösen von den Kunststoffrohren zu schützen, können die Metallelemente auch an den rohrseitigen Enden der Kopplungsbereiche angeordnet sein, die jedoch schwerer zugänglich sind. Dadurch dass sichergestellt ist, dass zumindest ein Metallelement an jeder Kontaktstelle bzw. Kontaktfläche zweier Aufschmelzbereiche vorhanden ist, ist es möglich, an zwei Orten über Induktionsspulen Wärme zu erzeugen, mit denen die Aufschmelzbereiche aufgeschmolzen und eine formschlüssige Verbindung an den beiden Kontaktstellen bzw. Kontaktflächen durch eine Zustellbewegung zu bewirken. Dadurch ist es möglich, sowohl die Kontaktfläche, die von der Rohrinnenwandung abgeht, als auch die Kontaktfläche, die von dem Rohraußenumfang abgeht, stoffschlüssig zu überbrücken, so dass verbesserte Dichtigkeits- und Festigkeitswerte erzielt werden. Durch die über Formschluss miteinander verbundenen Verrastungs- und Formschlussmittel ist es möglich, das Rohr entgegen der Einführrichtung sofort wieder zu belasten, ohne auf Abkühlzeiten angewiesen zu sein. Es kann daher eine nahezu kontinuierliche Rohrverlegung stattfinden, indem ein erstes Rohr durch einen zu sanierenden Rohrkanal hindurch gezogen wird, während ein zweites und weitere Rohrstücke an das jeweilige Rohrende angesetzt, verrastet und verschweißt und mitgezogen werden.

Die Metallelemente sind entweder unmittelbar an der Kontaktfläche der stirnseitigen oder rohrseitigen Kopplungsbereiche angeordnet oder aber innerhalb der Aufschmelzbereiche eingebracht. Sind beiderseits der Kontaktflächen der stirnseitigen und rohrseitigen Enden der Kopplungsbereiche die Metallelemente angeordnet, kann eine sehr schnelle Erwärmung der jeweiligen Aufschmelzbereiche erfolgen, da eine größere Wärmemenge aufgrund der Induktion innerhalb der einander gegenüberliegenden Metallelemente bereitgestellt wird.

Um die Rohrenden sicher zu fügen, so dass neben einer mechanischen Kopplung durch die Verrast- und Formschlussmittel auch durch eine ausreichende Verschiebebewegung ein Aufeinanderzuschieben der aufgeschmolzenen Aufschmelzbereiche und eine stoffschlüssige Verbindung im Bereich der stirnseitigen und rohrseitigen Enden der Kopplungsbereiche stattfindet, sind Formschlusselemente an den Rohren vorgesehen. Das Formschlusselement ist vorzugsweise als eine Nut, z. B. eine Umlaufnut ausgebildet, so dass ein Verlegen aneinander gefügter Rohrabschnitte durch überstehende Abschnitte nicht behindert wird.

Um auch möglichst kurze Rohrstücke fügen zu können, sind die Formschlusselemente in Nachbarschaft zu den Kopplungsbereichen an dem Außenumfang der Kunststoffrohre ausgebildet, so dass eine Vorrichtung zum Fügen der Kunststoffrohre nur entsprechend kleine Abmaße aufzuweisen braucht.

Um einen Durchtritt des aufgeschmolzenen Kunststoffmaterials durch das Metallelement zu ermöglichen, ist dies aus einem Metallgewebe oder einem Metallgitter aufgebaut, andere Durchbrechungen sind ebenfalls möglich, um ein Vermischen des Kunststoffes der jeweiligen Aufschmelzbereiche zu ermöglichen.

Das erfindungsgemäße Verfahren zum Fügen zweier Kunststoffrohre sieht vor, dass je ein stirnseitiger und rohrseitiger Aufschmelzbereich des vorderen und hinteren Rohrendes aufgeschmolzen und die Rohrenden weggesteuert in eine Endposition ineinander geschoben werden, in der die Verrast- und Formschlussmittel der Rohre formschlüssig miteinander verbunden werden und gleichzeitig in den aufgeschmolzenen Bereichen eine stoffschlüssige Verbindung hergestellt wird. Eine Wegsteuerung der Fügebewegung ist notwendig, da durch das Aufschmelzen beider Aufschmelzbereiche der stirnseitigen und der rohrseitigen Enden der Kopplungsbereiche eine korrekte Fügung sowohl der Verrastungs- und Formschlussmittel als auch eine ausreichende und präzise Nachführung beziehungsweise Zustellung der Rohre aufeinander zu zur Gewährleistung des Stoffschlusses und des Formschlusses gewährleistet sein muss.

Zweckmäßigerweise werden die Aufschmelzbereiche über Induktionsspulen aufgeschmolzen, die im Bereich der Metallelemente angeordnet werden, wobei die Rohre über mit in Formschlusselementen am Rohr in Eingriff stehende Klemmringe ineinander geschoben werden.

Die Vorrichtung zum Fügen zweier Kunststoffrohre sieht einen weggesteuerten Aktuator vor, der mit zwei Kopplungselernenten gekoppelt ist, die in die Formschlusselemente eingreifen und mit zumindest einer Induktionsspule versehen sind, die den Metalleiementen zugeordnet ist. Dadurch ist es möglich, neben der Wärmeerzeugung in den Aufschmelzbereichen auch eine Kraft in Axialrichtung auf die Rohre auszuüben, um die Kopplungsbereiche ineinander zu schieben, um sowohl eine mechanische als auch eine stoffschlüssige Verbindung der beiden Rohre zu ermöglichen.

Um die erheblichen Fügekräfte aufzubringen, ist der Aktuator vorzugsweise als eine Hydraulikeinheit ausgebildet.

Nachfolgend wird ein Ausführungsbeispiel der Erfindung anhand der beigefügten Figuren näher erläutert. Es zeigen:
- Figur 1 -: eine Querschnittsansicht zweier Rohre im nicht gefügten Zustand; so-wie
- Figur 2 -: eine Teilschnittdarstellung zweier gefügter Rohre mit einer Fügevorrichtung.

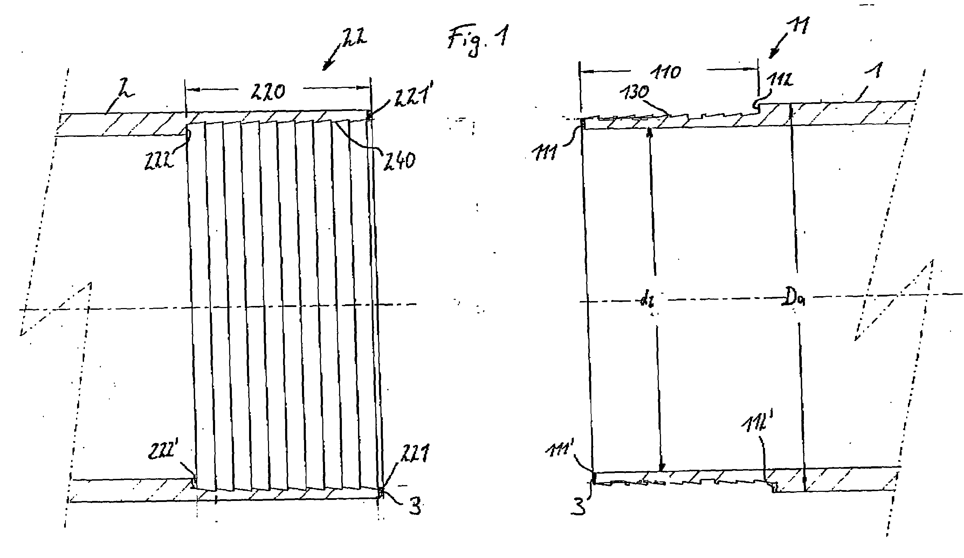

In der Figur 1 sind zwei Kunststoffrohre 1 und 2 in Querschnittsdarstellung gezeigt, das erste Rohr 1 weist einen vorderen Kopplungsbereich 110 und das zweite Rohr 2 weist einen hinteren Kopplungsbereich 220 auf. Entsprechende Ausbildungen der Kopplungsbereiche sind an dem jeweiligen anderen Ende ausgebildet. Der Außendurchmesser D_{A} beider Rohre 1, 2 ist gleich, der vordere Kopplungsbereich 110 weist gegenüber dem Außendurchmesser D_{A} einen verringerten Außendurchmesser auf, während der Innendurchmesser des hinteren Kopplungsbereiches 220 des zweiten Rohres 2 einen gegenüber dem Innendurchmesser dᵢ vergrößerten Innendurchmesser aufweist. An dem Außenumfang des vorderen Kopplungsbereiches 110 sind Verrastmittel 130 in Gestalt von sägezahnförmigen Erhebungen ausgebildet, die korrespondierend zu Formschlussmitteln 240 in dem hinteren Kopplungsbereich 220 des zweiten Rohres 2 ausgebildet sind.

Der vordere Kopplungsbereich 110 am vorderen Ende 11 des ersten Rohres 1 weist ein stirnseitiges Ende 111 und ein rohrseitiges Ende 112 auf. Korrespondierend dazu weist am hinteren Ende 22 der Kopplungsbereich 220 ein stirnseitiges Ende 221 und ein rohrseitiges Ende 222 auf. Die stirn- und rohrseitigen Enden 111, 112, 221, 222 sind im Wesentlichen senkrecht zur Längserstreckung der Rohre 1, 2 ausgebildet. An den stirn- und rohrseitigen Enden 111, 112, 221, 222 schließen sich Aufschmelzbereiche 111', 112', 221', 222' an, die dazu vorgesehen sind, nach einer induktiven Erwärmung der Metallelemente 3, die in dem dargestellten Ausführungsbeispiel jeweils an den stirnseitigen Enden 111, 221 der Kopplungsbereiche 110, 220 angeordnet sind, aufzuschmelzen. Die Aufschmelzbereiche 111', 112', 221', 222' sind so ausgebildet, dass bei einem Fügen der beiden Rohre 1, 2 ohne Aufschmelzen die Verrastungs- und Formschlussmittel 130, 240 bereits eine formschlüssige Verbindung eingehen, jedoch noch nicht in der vorgesehenen Endposition liegen, in der sämtliche Verrastungs- und Formschlussmittel 130, 240 miteinander in Eingriff stehen. Treffen die stirnseitigen Enden 111, 221 auf die rohrseitigen Enden 112, 222, ist zwischen einer Kontaktfläche der jeweiligen Enden je ein Metallelement 3 angeordnet, vorliegend an den stirnseitigen Enden 111, 221 der Rohre 1, 2.

Nach dem solcher Art ausgeführten Fügen der beiden Rohre 1, 2 werden die Metallelemente 3 induktiv erwärmt.

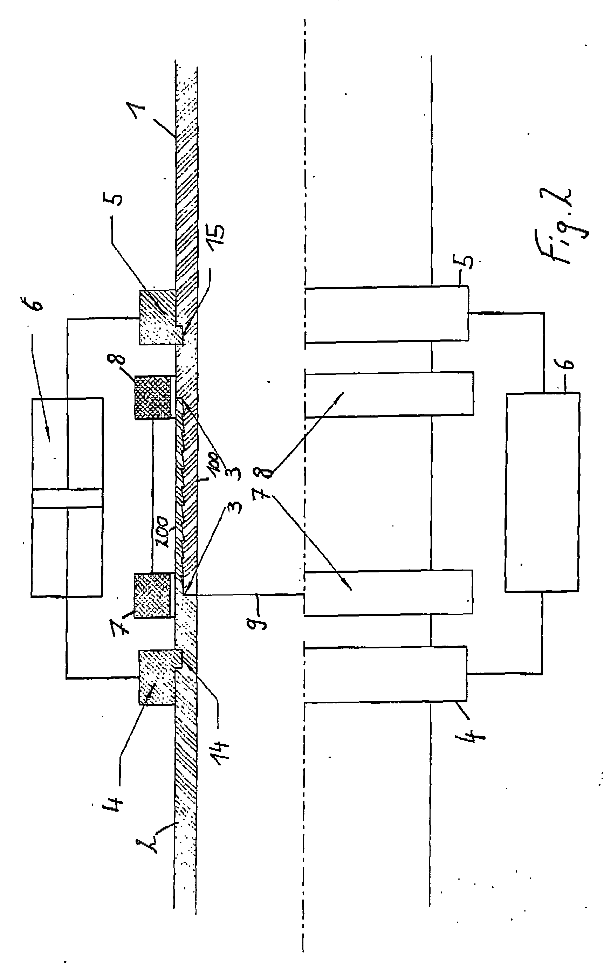

Dies geschieht mit einer Vorrichtung, die in der Figur 2 gezeigt ist. Die beiden Rohre 1, 2 sind in dem dargestellten Zustand über eine Hydraulikeinheit 6, die über Klemmringe 4, 5, die in Umlaufnuten 14, 15 in die Rohre 1, 2 eingreifen, in die Fügestellung gebracht worden. Über Induktionsspulen 7, 8, die im Bereich der Kontaktflächen 9 angeordnet sind, wird mittels eines elektromagnetischen Feldes Wärme erzeugt. Die Aufschmelzbereiche 111', 112', 221', 222' werden aufgeschmolzen. Daraufhin wird über den Aktuator 6, vorliegend eine Hydraulikspannvorrichtung, der restliche Fügeweg aufgebracht, so dass sämtliche Verrastungs- und Formschlussmittel 130, 240 vollständig ineinandergreifen und die aufgeschmolzenen Materialien ineinander gedrückt werden, um sich miteinander zu vermischen. Auf diese Weise wird an den Kontaktflächen 9, vorliegend als Ringflächen ausgebildet, eine stoffschlüssige Verbindung der beiden Rohre 1, 2 hergestellt, zusätzlich zu den formschlüssigen Verbindungen über die Verrastungs- und Formschlussmittel 130, 240.

Auf diese Weise wird sowohl eine Verschweißung der beiden Rohre 1, 2 miteinander an der außen sichtbaren Kontaktfläche 9 als auch an der inneren Kontaktfläche 9 gewährleistet, was zu einer erhöhten Dichtigkeit und Festigkeit der Verbindung führt. Durch die lediglich lokale Erwärmung und Aufschmelzung und die zusätzlichen Formschluss- und Verrastungsmittel 240, 130 ist es möglich, unmittelbar nach dem Verschweißen die Rohre 1, 2 mechanisch zu belasten. Dies geschieht in der dargestellten Anordnung durch ein Verschieben nach rechts, also entgegen der Fügerichtung des ersten Rohres 1.

Die Steuerung des Verschiebeweges nach dem Erwärmen und Aufschmelzen der Aufschmelzbereiche 111', 112', 221', 222' erfolgt weggesteuert, beispielsweise über Anschläge innerhalb des Aktuators 6 oder über eine Wegmesseinrichtung. Durch die Wegsteuerung wird einerseits verhindert, dass eine unzureichende Fügung vorhanden ist, also dass die mechanische Verbindung nicht vollständig greift, andererseits wird verhindert, dass die Rohre 1, 2 zu weit ineinander geschoben werden, so dass sich eine wirksame Verrastung nicht einstellt und sich über die Rohrinnenseite 100 überstehende Wülste bilden, die eine nachteilige Wirkung auf den Strömungswiderstand des gefügten Rohres hätten.

## Patentansprüche

1. Kunststoffrohr mit einem vorderen Ende und einem hinteren Ende, wobei an dem vorderen Ende ein vorderer Kopplungsbereich mit formschlüssig wirkenden Verrastungsmitteln und an dem hinteren Ende ein hinterer Kopplungsbereich ausgebildet ist, der korrespondierend zu den Verrastungsmitteln ausgebildete Formschlussmittel aufweist, wobei der hintere Kopplungsbereich zur Aufnahme eines vorderen Kopplungsbereiches eines zweiten Kunststoffrohres ausgebildet ist, so dass mehrere Rohre miteinander mechanisch verbindbar sind, **dadurch gekennzeichnet, dass** an stirnseitigen Enden (111, 221) der Kopplungsbereiche (110, 220) und an rohrseitigen Enden (112, 222) der Kopplungsbersiche (110, 220) sich in Axialrichtung erstreckende Aufschmelzbereiche (111', 112', 221', 222') ausgebildet sind und Metallelemente (3) dergestalt im Bereich der stirnseitigen oder rohrseitigen Enden (111, 112, 221, 222) der Kopplungsbereiche angeordnet sind, dass je zumindest ein Metallelement (3) im Bereich einer Kontaktstelle (9) zweier Aufschmelzbereiche (111', 222' ; 112', 221') vorhanden ist.

2. Kunststoffrohr nach Anspruch 1, **dadurch gekennzeichnet, dass** das Metallelement (3) in den Aufschmelzbereichen (111', 112', 221', 222') des hinteren und/oder vorderen Kopplungsbereiches (110, 220) angeordnet ist.

3. Kunststoffrohr nach Anspruch 1, **dadurch gekennzeichnet, dass** das Metallelement (3) in den jeweils stirnseitigen oder rohrseitigen Aufschmelzbereichen (111', 112', 221', 222') der Kopplungsbereiche (110, 220) angeordnet ist.

4. Kunststoffrohr nach einem der voranstehenden Ansprüche, **dadurch gekennzeichnet, dass** die Metallelemente (3) an den stirnseitigen oder rohrseitigen Enden (111, 112, 221, 222) der Kopplungsbereiche (110, 220) angeordnet sind.

5. Kunststoffrohr nach einem der voranstehenden Ansprüche, **dadurch gekennzeichnet, dass** an dem Außenumfang des Kunststoffrohres (1, 2) ein Formschlusselement (14, 15) ausgebildet ist.

6. Kunststoffrohr nach Anspruch 5, **dadurch gekennzeichnet, dass** das Formschlusselement (14, 15) als eine Nut, vorzugsweise eine Umlaufnut ausgebildet ist.

7. Kunststoffrohr nach Anspruch 5 oder 6, **dadurch gekennzeichnet, dass** das Formschlusselement (14, 15) in der Nachbarschaft zu den Kopplungsbereichen (110, 220) ausgebildet ist.

8. Kunststoffrohr nach einem der voranstehenden Ansprüche, **dadurch gekennzeichnet, dass** das Metallelement (3) ein Metallgewebe oder Metallgitter ist.

9. Verfahren zum Fügen eines ersten Kunststoffohres mit einem zweiten Kunststoffrohr nach einem der voranstehenden Ansprüche, **dadurch gekennzeichnet, dass** je ein stirnseitiger und rohrseitiger Aufschmelzbereich (111', 221'; 112', 222') des vorderen und hinteren Rohrendes (11, 22) aufgeschmolzen und die Rohrenden (11, 22) weggesteuert in eine Endposition ineinander geschoben werden, in der die Verrast- und Formschlussmittel (130, 240) der Rohre (1, 2) formschlüssig miteinander verbunden werden und in den aufgeschmolzenen Bereichen eine stoffschlüssige Verbindung hergestellt wird.

10. Verfahren nach Anspruch 9, **dadurch gekennzeichnet, dass** die Aufschmelzbereiche (111', 112', 221', 222') über Induktionsspulen (7, 8), die im Bereich der Metallelemente (3) angeordnet werden, aufgeschmolzen werden.

11. Verfahren nach Anspruch 9 oder 10, **dadurch gekennzeichnet, dass** die Rohre (1, 2) über mit in Formschlusselementen (14, 15) am Rohr (1, 2) in Eingriff stehende Klemmringe (4, 5) ineinander geschoben werden.

12. Vorrichtung zum Fügen zweier Rohre (1, 2) nach den Ansprüchen 5 bis 8 mit einem weggesteuerten Aktuator (6), der mit zwei Kopplungselementen (4, 5) gekoppelt ist, die in die Formschlusselemente (14, 15) eingreifen und mit zumindest einer Induktionsspule (7, 8), die den Metalleiementen (3) zugeordnet ist.

13. Vorrichtung nach Anspruch 12, **dadurch gekennzeichnet, dass** der Aktuator (6) als Hydraulikeinheit ausgebildet ist.
